## Europäisches Patentamt
## European Patent Office
## Office européen des brevets

(19)

(11) Veröffentlichungsnummer: **0 196 140**
**B1**

(12)
# EUROPÄISCHE PATENTSCHRIFT

(45) Veröffentlichungstag der Patentschrift:
26.07.89

(51) Int. Cl.⁴: **C03B 37/016**

(21) Anmeldenummer: 86200485.0

(22) Anmeldetag: 21.03.86

(54) Verfahren und Vorrichtungen zur Herstellung von Glaskörpern.

(30) Priorität: 29.03.85 DE 3511454

(43) Veröffentlichungstag der Anmeldung:
01.10.86 Patentblatt 86/40

(45) Bekanntmachung des Hinweises auf die Patenterteilung:
26.07.89 Patentblatt 89/30

(84) Benannte Vertragsstaaten:
DE FR GB IT NL SE

(56) Entgegenhaltungen:
EP-A- 0 129 625
DE-C- 803 027
GB-A- 2 041 913

(73) Patentinhaber: **Philips Patentverwaltung GmbH,**
**Wendenstrasse 35 Postfach 10 51 49,**
**D-2000 Hamburg 1(DE)**

(84) Benannte Vertragsstaaten: **DE**

(73) Patentinhaber: **N.V. Philips' Gloeilampenfabrieken,**
**Groenewoudseweg 1, NL-5621 BA Eindhoven(NL)**

(84) Benannte Vertragsstaaten: **FR GB IT NL SE**

(72) Erfinder: **Clasen, Rolf, Dipl.-Phys. Dr.,**
**Schlossparkstrasse 36, D-5100 Aachen(DE)**

(74) Vertreter: **Nehmzow-David, Fritzi-Maria et al, Philips**
**Patentverwaltung GmbH**
**Wendenstrasse 35 Postfach 10 51 49,**
**D-2000 Hamburg 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Glaskörpern, bei dem das Ausgangsmaterial für den Glaskörper in Form einer thixotropen Suspension unter Einwirkung mechanischer Kräfte mindestens einer Walze homogenisiert und dabei verflüssigt wird, wonach es der Einwirkung der mechanischen Kräfte entzogen wird, infolge des Thixotropieeffektes verfestigt und als poröser Grünkörper einem Reinigungsschritt in einer erhitzten Gasphase unterzogen und dann zu einem Glaskörper gesintert wird.

Die Erfindung bezieht sich weiter auf Vorrichtungen zur Durchführung eines solchen Verfahrens sowie auf die Verwendung der nach dem Verfahren gemäß der Erfindung hergestellten Glaskörper.

Das eingangs genannte Verfahren ist insbesondere geeignet zur Herstellung von Vorformen für optische Wellenleiter.

In der keramischen Technik werden für hochviskose Formmassen, die direkt ohne weiteren Wasserentzug geformt werden können, je nach Viskosittät Walzenstühle

$$(\eta \approx 10^3 Pa\ s),$$

Kneter

$$(\eta \approx 10^4 Pa\ s)$$

oder Extruder

$$(\eta \approx 10^5 ... 10^6 Pa\ s)$$

eingesetzt, um die Massen vor dem Formgebungsprozeß zu homogenisieren.

Nachteilig bei der Mischung und Homogenisierung von vorwiegend wässerigen, hochviskosen Formmassen mit Quarzlasteilchen mit den bekannten Mischern ist, daß die Walzen, Knetschaufeln oder Extruderschnecken vorwiegend aus legierten Stählen hergestellt werden. Der wegen der Härte des Quarzglaspulvers (Mohs Härte: Quarz ≈ 7, Stahl ≈ 5) unvermeidliche Abrieb führt mit zunehmenden Knetzeiten zu beträchtlichen Verunreinigungen der Masse durch Eisen, Chrom, Nickel usw., die nur schwer zu entfernen sind, zumindest aber den Reinigungsaufwand der aus den Massen geformten Grünkörper wesentlich erhöht. Insbesondere bei der Sinterung dieser Grünkörper zu Quarzglasrohren oder Quarzglasstäben als Mantel- oder Kernmaterial für optische Wellenleiter fallen diese Verunreinigungen besonders ins Gewicht, da schon geringe Konzentrationen im ppb-Bereich das Transmissionsverhalten der optischen Wellenleiter stark nachteilig beeinflussen.

Nachteilig bei der Anwendung von Knetern und Extrudern ist außerdem, daß nur jeweils ein geringer Anteil der gesamten zu verarbeitenden Masse geschert wird. Da hochgefüllte wässerige Massen aus hochdispersen Quarzglasteilchen eine im Vergleich zu bekannten keramischen Massen außergewöhnlich hohe Thixotropie aufweisen, ist die Masse nur in den gescherten Bereichen dünnflüssiger und wird somit nur an diesen Stellen gut durchmischt. Um homogene Massen zu erhalten, muß die zu verarbeitende Masse durch zusätzlichen Aufwand aus den toten Winkeln der Vorrichtungen in die Scherzone gedrückt werden.

Beim Kneten mit einem Dreiwalzenstuhl wird zwar jedes Volumenelement der Masse in gleicher Weise geschert (sofern es von den Walzen überhaupt eingezogen wird), jedoch die zu einem dünnen Film ausgewalzten Massen geben schnell Feuchtigkeit ab und verändern damit Zusammensetzung und Viskosität, sofern nicht ein zusätzlicher Aufwand zur Verhinderung dieser unerwünschten Effekte betrieben wird.

Den bekannten Verfahren zur Verarbeitung von hochviskosen keramischen Massen haftet damit der Nachteil eines großen zeitlichen Aufwandes an und es sind außerdem langwierige Reinigungsprozeduren erforderlich, wenn hochreine Quarzglaskörper, wie sie z.B. für die Herstellung von optischen Wellenleitern erforderlich sind, hergestellt werden sollen.

Der Erfindung liegt die Aufgabe zugrunde, ein Verfahren und Vorrichtungen anzugeben, mit denen eine in Zusammensetzung und rheologischen Eigenschaften homogene Masse für die Herstellung eines hochreinen Glaskörpers erhalten wird, wobei insbesondere vermieden wird, daß Verunreinigungen aus Aufbereitungsvorrichtungen in die Masse gelangen.

Diese Aufgabe wird mit dem erfindungsgemäßen Verfahren dadurch gelöst, daß das Ausgangsmaterial in einer abgeschlossenen elastischen Form homogenisiert und verflüssigt wird, wobei die Walze als Vibratorwalze ausgebildet ist und mit der Form in Druckkontakt gebracht und über die verschlossene Form geführt wird, und das Ausgangsmaterial nach der Verfestigung entformt wird.

Hiermit ist der Vorteil verbunden, daß auch hochviskose Ausgangsmassen für die Herstellung eines Glaskörpers besonders effizient homogenisiert werden können, wobei durch die Anwendung einer Zwischenform in Form eines Schlauches verhindert wird, daß das Ausgangsmaterial durch Aufbereitungsvorrichtungen verunreinigt wird. Massen für die Herstellung von Gläsern für z.B. die Herstellung von optischen Wellenleitern müssen unter höchstreinen Bedingungen verarbeitet werden; hier sind Fertigungsverfahren, wie sie aus der Glastechnologie oder aus der keramischen Technologie allgemein bekannt sind, nicht mehr einsetzbar. Mit dem vorliegenden Verfahren ist es möglich, Massen für die Herstellung von höchstreinen Gläsern, insbesondere für die Herstellung von optischen Wellenleitern, geschützt von schädlichen Umwelteinflüssen, seien diese nun aus der Atmosphäre oder aus Vorrichtungen stammende Verunreinigungen oder auch nur Verdampfungsverluste, bis zum Stadium eines trockenen Grünkörpers abgekapselt zu erarbeiten.

Vorrichtungen zur Durchführung des erfindungsgemäßen Verfahrens unter Einsatz midestens einer als Schallschwinger ausgebildeten Walze sind gekennzeichnet durch

1. einen festpositionierten Auflagetisch und mindestens eine im Schallbereich (20 bis 200 Hz) arbeitende Vibratorwalze mit einem Leerlaufhub bis zur Größe des Durchmessers einer zwischen dem Auflagetisch und der(den) Vibratorwalze(n) anzuordnenden abgeschlossenen elastischen Form mit zu homogenisierendem und dabei zu verflüssigendem Ausgangsmaterial, wobei die Vibratorwalze(n) unter federndem Anpreßdruck p einer Größe von 1 bis $5.10^5$ Pa in horizontaler Richtung über die Form hin- und herführbar ist(sind) oder

2. einen festpositionierten Auflagetisch und mindestens eine im Ultraschallbereich (20 bis 50 kHz) arbeitende Vibratorwalze mit einer Schwingungsamplitude bis 100μm, die unter federndem Anpreßdruck p einer Größe von 1 bis $5.10^5$ Pa in horizontaler Richtung über eine, zwischen dem Auflagetisch und der(den) Vibratorwalze(n) anzuordnende abgeschlossene elastische Form mit zu homogenisierendem und dabei zu verflüssigendem Ausgangsmaterial hin- und herführbar ist(sind).

Es ist anzumerken, daß aus der deutschen Patentschrift 803 027 eine Vorrichtung zum Formen und Glätten insbesondere von Dachziegeln bekannt ist, die mit Walzen, Abstreifern oder dergleichen Werkzeugen arbeitet, welche als Schallschwinger ausgebildet oder mit Schallschwingern verbunden sind.

Nach einer vorteilhaften Weiterbildung des Verfahrens nach der Erfindung wird eine Form aus gummielastischem Material eingesetzt.

Nach vorteilhaften Weiterbildungen des Verfahrens gemäss der Erfindung wird als Ausgangsmaterial für den Glaskörper eine Suspension eingesetzt, die $SiO_2$-Partikel eines Durchmessers im Bereich von 10 bis 500 nm, vorzugsweise 15 bis 100 nm enthält, wobei eine wässerige Suspension mit einem Feststoff: Wasser-Gewichtsverhältnis von 1:1 bis 2,4:1, vorzugsweise von 1,4:1 bis 2:1, eingesetzt wird, die vorteilhafterweise einen ionogenen, den pH-Wert der Suspension in den Bereich pH ≈ 5,5-8 verschiebenden Zusatzstoff in einer Menge von 0,2-2,0 Gew.%, bezogen auf den Feststoffanteil der Suspension, enthält.

Der Erfindung liegt die Erkenntnis zugrunde, daß ein besonders hoher Thixotropieeffekt bei wässerigen Suspensionen aus submikroskopischen $SiO_2$-Teilchen eines Teilchendurchmessers von 10 bis 500 nm durch Zusatz von 0,2-2,0 Gew.% (bezogen auf den Feststoffanteil der Suspension) einer basisch reagierenden ionogenen Substanz, die den pH-Wert der Suspension in den Bereich pH ≈ 5,5-8 verschiebt, eintritt, der dazu ausgenutzt werden kann, das Ausgangsmaterial für den herzustellenden Glaskörper im verflüssigten Zustand besonders effizient zu homogenisieren und zu verdichten und gleichzeitig zu verformen. Diese Prozeßschritte können nach einer weiteren Erkenntnis der Erfindung besonders effizient in einer elastischen, abgeschlossenen Form durchgeführt werden, wobei sich der Vorteil ergibt, daß unter höchstreinen Fertigungsbedingungen aber mit relativ geringem apparativem Aufwand gearbeitet werden kann.

Nach weiteren vorteilhaften Ausgestaltungen des Verfahrens nach der Erfindung wird als ionogener Zusatzstoff eine Ammoniumverbindung, vorzugsweise $NH_4F$ in wässeriger Lösung, eingesetzt. Ammoniumverbindungen sind leicht flüchtig und in einem nachfolgenden Reinigungs-Erhitzungsschritt rückstandslos aus dem Grünkörper zu entfernen, so daß Quarzglaskörper einer hohen Reinheit herstellbar sind. Durch den Zusatz von Ammoniumverbindungen werden Grünkörper einer relativ hohen Festigkeit erreicht, da sie vernetzungsfördernd wirken, wobei an den Kontaktstellen zweier $SiO_2$-Primärpartikel eine Gelbildung auftritt. Bei beispielsweise einer Suspensionstemperatur von 20°C und einem pH-Wert ≤ 10 geht $SiO_2$ in der Größenordnung von etwa 100 ppm in Lösung und wird an den Kontaktstellen ausgeschieden und bildet damit eine Brückenschicht.

Mit einem Zusatz von $NH_4F$ kann eine Fluordotierung erreicht werden, die beispielsweise für die Herstellung von Mantelgläsern für optische Wellenleiter geeignet ist.

Nach einer weiteren vorteilhaften Ausgestaltung des Verfahrens nach der Erfindung wird das Ausgangsmaterial durch Walzen mit einer im Schallbereich (50 Hz) oder Ultraschallbereich (35 kHz) arbeitenden Vibratorwalze homogenisiert, die einen Leerlaufhub bis zur Größe des Formdurchmessers hat und unter federndem Anpreßdruck p in einer Größe von 1 bis $5.10^5$ Pa steht; das Ausgangsmaterial wird also durch Einkopplung eines Schall- oder Ultraschallfeldes verflüssigt und homogenisiert. Eine Gel-Sol-Umwandlung tritt bei thixotropen Systemen bei jeder Art mechanischer Einwirkung, z.B. auch Rühren oder Schütteln, ein, wird jedoch ein Schall- oder Ultraschallschwinger eingesetzt, dessen Amplitude so bemessen ist, daß das Schall- bzw. Ultraschallfeld in das zu homogenisierende und dabei zu verflüssigende Ausgangsmaterial eingekoppelt wird, ergibt sich eine besonders wirkungsvolle Auflösung von Packungshohlräumen im Ausgangsmaterial (Gase werden freigesetzt) und damit eine besonders hohe Verdichtung des Ausgangsmaterials. Die auf diese Weise freigesetzten Gas können durch Öffnen der elastischen Form noch während des Walz-Homognisierungsprozesses aus dem Ausgangsmaterial entfernt werden.

Anhand der Figur wird ein Ausführungsbeispiel der Erfindung beschrieben.

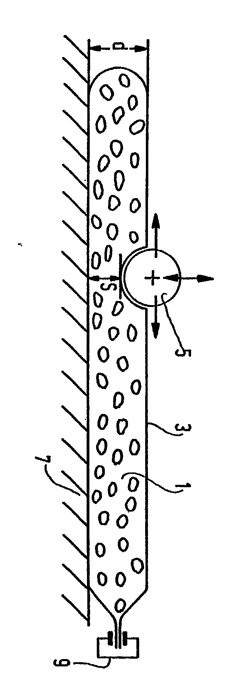

Figur 1 zeigt eine Vorrichtung zur Durchführung des Verfahrens nach der Erfindung im Schnitt.

Als Ausgangsmaterial für die Herstellung eines Glaskörpers wurde eine hochviskose wässerige Suspension hergestellt; dazu wurden 150g von im Handel erhältlichem hochdispersem $SiO_2$ eines mittleren Teilchendurchmessers von 40 nm mit 85 ml Wasser und 15 ml wässerigem $NH_4F$ (5%) versetzt. Ein auf diese Weise erhaltenes krümeliges, partiell durchfeuchtetes Ausgangsmaterial 1 wurde in einen dünnwandigen, elastischen Schlauch 3 einer Wandstärke von 0,8 mm, eines Durchmessers von 30 mm und einer Länge von 160 mm, der vorzugsweise aus Naturkautschuk besteht, so eingefüllt, daß der Schlauch 3 merklich gedehnt wird, daß aber die Reißfestigkeit in keinem Betriebszustand überschritten wird. Danach wurde der Schlauch 3 verschlossen. Mit einer Vibratorwalze 5, die mit einer Frequenz f=5 Hz arbeitet, wurde das Ausgangsmaterial 1 verflüssigt, vermischt und homogenisiert. Die Vibratorwalze 5 hatte einen Leerlaufhub von 28 mm und wurde mit einem federnden Anpreßdruck p=1.10^5 Pa über den elastischen Schlauch 3 in horizontaler Richtung mit einer Geschwindigkeit von 30 cm/min und über eine Dauer von 15 min hin und hergeführt. Mit zunehmender Vermischung und Homogenisierung des Ausgangsmaterials 1 im Schlauch 3 verringert sich der Abstand s zwischen der Vibratorwalze 5 und einem Auflagetisch 7, auf dem der Schlauch 3 angeordnet ist, infolge der allmählichen Verflüssigung des Ausgangsmaterials 1, bis ein durch die Hubhöhe der Vibratorwalze 5 begrenzter fester Abstand s erreicht ist. Da die Schallschwingungen der Vibratorwalze 5, gut über den elastischen Schlauch 3 in das Ausgangsmaterial 1 einkoppeln können und das Ausgangsmaterial 1 durch den gedehnten Schlauch 3 zusammengepreßt wird, werden große Volumenanteile des Ausgangsmaterials 1 geschert und das Ausgangsmaterial 1 erreicht damit das Viskositätsminimum. Durch den Schlauch 3 werden gleichzeitig metallische Kontaminationen und Feuchtigkeitsverlust verhindert. Aus dem Ausgangsmaterial 1 während des Walzprozesses freigesetzte Luft kann bei fortgeschrittener Homogenisierung durch Öffnen einer Verschlußklemme 9 am Schlauch 3 entfernt werden.

Durch zusätzliche Walzen oder Ultraschalleinkopplung über den Auflagetisch in 'gleichzeitigen oder abwechselnden Betriebsmodus zur Vibratorwalze 5 kann der Wirkungsgrad noch verbessert und in kürzeren Zeiten eine gut homogenisierte Ausgangsmasse erreicht werden.

Statt einer im Schallbereich arbeitenden Vibratorwalze kann auch eine im Ultraschallbereich (20 bis 50 kHz) arbeitende Vibratorwalze eingesetzt werden. Der im Vergleich zu einer im Schallbereich arbeitenden Vibratorwalze geringere Leerlaufhub wird zweckmäßigerweise durch eine gesteuerte Verringerung des Abstandes s ausgeglichen. Für im Ultraschallbereich arbeitende Walzen ist eine Schwingungsamplitude bis 100μm typisch, auch hier muß mit einem federnden Anpreßdruck in der Größenordnung von 1 bis 5.10^5 Pa gearbeitet werden. Die übrigen Prozeßparameter entsprechen den oben, für eine im Schallbereich arbeitende Vibratorwalze beschriebenen Prozeßparametern.

Nach Beendigung dieser ersten Homogenisierungsphase wird der Schlauch 3 mit dem nunmehr relativ dünnflüssigen Ausgangsmaterial 1 in einer zweiten Homogenisierungsphase über eine Dauer von 10 min senkrecht in ein Ultraschallbad gehalten, wobei nochmals eingeschlossene Luftblasen im Ausgangsmaterial 1 aufsteigen und über Öffnen der Verschlußklemme 9 entfernt werden können.

Das durch Einwirkung von Schall- oder Ultraschallschwingungen verflüssigte Ausgangsmaterial verfestigt infolge des Thixotropieeffektes bei Abkopplung vom Schall- oder Ultraschallfeld.

Zur Entfernung des homogenisierten Ausgangsmaterials kann so vorgegangen werden, daß das verflüssigte Ausgangsmaterial mitsamt der elastischen Form in eine weitere, der Form des herzustellenden Glaskörpers entsprechende Form eingesetzt wird und dort verformt verfestigt, wonach die elastische Form vom verfestigten Ausgangsmaterial, das nunmehr als geformter Grünkörper vorliegt, abgeschält werden kann.

Es kann jedoch auch so verfahren werden, daß das homogenisierte Ausgangsmaterial in der elastischen Form direkt ohne zusätzliche Form erstarren gelassen und wie an anderer Stelle beschrieben, weiterbehandelt wird.

Um OH-Ionen und Verunreinigungen in Form von Übergangsmetallen zu entfernen, wird der geformte und getrocknete Grünkörper bei Temperaturen im Bereich von 600 bis 900°C eine bis mehrere Stunden einer strömenden Sauerstoffatmosphäre mit 6 Vol% Chlorgaszusatz ausgesetzt. Der anfängliche OH-Gehalt von etwa 200ppm kann damit auf < 10 ppb reduziert werden. Anschließend erfolgt eine Sinterung des Grünkörpers zu transparentem Glas bei eine Temperatur von 1500°C in einer Heliumatmosphäre mit 2 Vol% Chlorgaszusatz, wobei der Grünkörper mit einer Absenkgeschwindigkeit von 3mm/min durch den Ofen geführt wurde. Ein auf diese Weise hergestellter Quarzglaskörper hatte eine Dichte von 2,20 g/cm^3, einen Brechungsindex $n_D$=1,4592 und war blasen- und schlierenfrei.

Eine Vorform, aus der optische Wellenleiter ausgezogen werden können mit einem Stufenprofil des Brechungsindex kann durch Dotierung des Grünkörpers und Einschmelzen in dotierte Rohre und/oder undotierte Mantelglasrohre erhalten werden. Ebenfalls ist es möglich, einen optischen Wellenleiter mit W-Profil des Brechungsindex durch zusätzliche Verwendung eines Zwischenrohres mit niedrigerem Brechungsindex, der ebenfalls durch entsprechende Dotierung eingestellt wird, herzustellen.

## Patentansprüche

1. Verfahren zur Herstellung von Glaskörpern, bei dem das Ausgangsmaterial für den Glaskörper in Form einer thixotropen Suspension unter Einwirkung mechanischer Kräfte mindestens einer Walze homogenisiert und dabei verflüssigt wird, wonach es der Einwirkung der mechanischen Kräfte entzogen wird, infolge des Thixotropieeffektes verfestigt und als poröser Grünkörper einem Reinigungsschritt in einer erhitzten Gasphase unterzogen und dann zu einem Glaskörper gesintert wird, dadurch gekennzeichnet, daß das Ausgangsmaterial in einer abgeschlossenen elastischen Form homogenisiert und verflüssigt wird, wobei die Walze als Vibratorwalze ausgebildet ist und mit der Form in Druckkontakt gebracht und über die verschlossene Form geführt wird und das Ausgangsmaterial nach der Verfestigung entformt wird.

2. Verfahren nach Anspruch 1, dadurch gekennzeichnet, daß eine Form aus gummielastischem Material eingesetzt wird.

3. Verfahren nach Anspruch 1 oder 2, dadurch gekennzeichnet, daß das verflüssigte Ausgangsmaterial mitsamt der elastischen Form in eine weitere, der Form des herzustellenden Glaskörpers entsprechende Form eingebracht und in dieser Form unter Ausnutzung des Thixotropieeffektes verfestigt, entformt und den weiteren Bearbeitungsschritten unterzogen wird.

4. Verfahren nach Anspruch 1 oder 2, dadurch gekennzeichnet, daß das verflüssigte Ausgangsmaterial unter Ausnutzung des Thixotropieeffektes in der elastischen Form verfestigt, entformt und den weiteren Bearbeitungsschritten unterzogen wird.

5. Verfahren nach einem der Ansprüche 1 bis 4, dadurch gekennzeichnet, daß als Ausgangsmaterial für den Glaskörper eine Suspension eingesetzt wird, die $SiO_2$-Partikel eines Durchmessers im Bereich 10 bis 500 nm, vorzugsweise 15 bis 100 nm, mit einem mittleren Teilchendurchmesser von 40 nm enthält.

6. Verfahren nach einem der Ansprüche 1 bis 5, dadurch gekennzeichnet, daß eine wässrige Suspension mit einem Feststoff: Wasser-Gewichtsverhältnis von 1:1 bis 2,4:1, vorzugsweise von 1,4:1 bis 2:1, eingesetzt wird.

7. Verfahren nach einem der Ansprüche 1 bis 6, dadurch gekennzeichnet, daß der Suspension ein basisch reagierender ionogener Zusatzstoff zugegeben wird, der den pH-Wert der Suspension in den Bereich pH $\approx$ 5,5 bis 8 verschiebt.

8. Verfahren nach Anspruch 7, dadurch gekennzeichnet, daß als ionogener Zusatzstoff eine Ammoniumverbindung eingesetzt wird.

9. Verfahren nach Anspruch 8, dadurch gekennzeichnet, daß $NH_4F$ in wässriger Lösung als ionogener Zusatzstoff eingesetzt wird.

10. Verfahren nach einem der Ansprüche 7 bis 9, dadurch gekennzeichnet, daß der ionogene Zusatzstoff in einer Menge von 0,2 bis 2,0 Gew.%, bezogen auf den Feststoffanteil in der Suspension, zugegeben wird.

11. Verfahren nach den Ansprüchen 9 und 10, dadurch gekennzeichnet, daß als Ausgangsmaterial eine wässerige Suspension eingesetzt wird, in der $SiO_2$-Partikel eines mittleren Teilchendurchmessers von 40 nm bei einem Feststoff: Wasser-Gewichtsverhältnis von 1,5:1 enthalten sind, wobei als ionogener Zusatzstoff eine 5%ige wässrige $NH_4F$-Lösung in einer Menge von 0,5 Gew.%, bezogen auf den Feststoffanteil der Suspension, zugesetzt wird.

12. Verfahren nach einem der Ansprüche 1 bis 11, dadurch gekennzeichnet, daß das Ausgangsmaterial durch Walzen mit einer im Schallbereich (50Hz) oder Ultraschallbereich (35 kHz) arbeitenden Vibratorwalze homogenisiert wird, die einen Leerlaufhub bis zur Größe des Formdurchmessers hat und unter federndem Anpreßdruck p in einer Größe von 1 bis $5,10^5$ Pa steht.

13. Verfahren nach einem der Ansprüche 1 bis 12, dadurch gekennzeichnet, dass als elastische Form ein Schlauch aus Naturkautschuk eingesetzt wird.

14. Vorrichtung zur Durchführung des Verfahrens nach den Ansprüchen 1 bis 13 unter Einsatz mindestens einer als Schallschwinger ausgebildeten Walze gekennzeichnet durch einen festpositionierten Auflagetisch (7) und mindestens eine im Schallbereich (20 bis 200 Hz) arbeitende Vibratorwalze (5) mit einem Leerlaufhub bis zur Größe des Durchmessers einer zwischen dem Auflagetisch und der(den) Vibratorwalze(n) anzuordnenden abgeschlossenen elastischen Form mit zu homogenisierendem und dabei zu verflüssigendem Ausgangsmaterial (1), wobei die Vibratorwalze(n) unter federndem Anpreßdruck p einer Größe von 1 bis $5,10^5$ Pa in horizontaler Richtung über die Form hin- und herführbar ist(sind).

15. Vorrichtung zur Durchführung des Verfahrens nach den Ansprüchen 1 bis 13 unter Einsatz mindestens einer als Schallschwinger ausgebildeten Walze gekennzeichnet durch einen festpositionierten Auflagetisch (7) und mindestens eine im Ultraschallbereich (20 bis 50 kHz) arbeitende Vibratorwalze (5) mit einer Schwingungsamplitude bis 100 µm, die unter federndem Anpreßdruck p einer Größe von 1 bis $5,10^5$ Pa in horizontaler Richtung über eine, zwischen dem Auflagetisch und der(den) Vibratorwalze(n) anzuordnende abgeschlossene elastische Form mit zu homogenisierendem und dabei zu verflüssigendem Ausgangsmaterial (1) hin- und herführbar ist(sind).

16. Vorrichtung nach Anspruch 14 oder 15, gekennzeichnet durch einen Schall- oder Ultraschallgenerator, der mit dem Auflagetisch (7) verkoppelt ist.

17. Vorrichtung nach einem der Ansprüche 14 bis 16, dadurch gekennzeichnet, daß die elastische Form ein Schlauch (3), insbesondere aus Naturkautschuk, ist.

18. Verwendung von nach dem Verfahren gemäß den Ansprüchen 1 bis 13 hergestellten Glaskörpern als Vorform für optische Wellenleiter.

**Claims**

1. A method of manufacturing glass bodies, in which method a thixotropic suspension, being the starting material for the glass body is homogenized and liquefied by subjecting it to the mechanical forces of at least one roller, and subsequently freeing it of the influence of the said forces, after which it solidifies due to the thixotropy effect, and the green body obtained is subjected to a purification step in a heated gaseous phase and then sintered to form a glass body, characterized in that the starting material is homogenized and liquefied in a closed elastic mould, the roller being constructed as a vibratory roller which is brought into contact, under pressure, with the mould and which is led over the closed mould, the starting material being removed from the mould after it has solidified.

2. A method as claimed in Claim 1, characterized in that a rubber elastic mould is used.

3. A method as claimed in Claim 1 or 2, characterized in that the liquefied starting material is introduced into another mould together with the elastic mould, the shape of which other mould corresponds to that of the glass body to be formed, in which mould the starting material solidifies due to the thixotropy effect, after which it is removed from the mould and subjected to the remaining production steps.

4. A method as claimed in Claim 1 or 2, characterized in that the liquefied starting material solidifies in the elastic mould due to the thixotropy effect, after which it is removed from the mould subjected to the remaining production steps.

5. A method as claimed in any one of the Claims 1 to 4, characterized in that a suspension is used as the starting material for the glass body, which comprises $SiO_2$ particles having a diameter in the range from 10 to 500 nm, preferably of from 15 to 100 nm, having an average particle diameter of 40 nm.

6. A method as claimed in any one of the Claims 1 to 5, characterized in that an aqueaous suspension is used having a weight ratio between solid matter and water from 1:1 to 2.4:1, preferably from 1.4:1 to 2:1.

7. A method as claimed in any one of the Claims 1 to 6, characterized in that a basically reacting ionogenic additive is added to the suspension, which causes the pH-value of the suspension to lie within the range $Ph \approx 5.5$ to 8.

8. A method as claimed in Claim 7, characterized in that an ammonium compound is used as an ionogenic additive.

9. A method as claimed in Claim 8, characterized in that $NH_4F$ in an aqueous solution is used as an ionogenic additive.

10. A method as claimed in any one of the Claims 7 to 9, characterized in that the ionogenic additive is added in a quantity of from 0.2 to 2.0% by weight of the solids content of the suspension.

11. A method as claimed in Claims 9 and 10, characterized in that an aqueous suspension is used as the starting material, which contains $SiO_2$ particles having an average diameter of 40 nm and a solid: water weight ratio of 1,5:1, a 5% aqueous $NH_4F$ solution in a quantity of 0.5% by weight of the solids content of the suspension being added as an ionogenic additive.

12. A method as claimed in any one of the Claims 1 to 11, characterized in that the starting material is homogenized using a vibratory roller which operates in the sound range (50Hz) or ultrasonic range (35 kHz), and which has a no-load excursion up to the diameter of the mould, and which is resiliently loaded with a pressure p of 1 to $5.10^5$ Pa.

13. A method as claimed in any one of the Claims 1 to 12, characterized in that a hose of natural rubber is used as the electric mould.

14. An arrangement for carrying out the method as claimed in any one of the Claims 1 to 13, and using at least one roller which is constructed as a sound vibrator, characterized by a fixedly positioned supporting table (7) and at least one vibratory roller (5) which operates in the sound range (20–200 Hz) and which has a no-load excursion up to the diameter of a closed elastic mould which is to be arranged between the supporting table and the vibratory roller(s) and which holds starting material (1) which is to be homogenized and liquefied, the vibratory roller(s) being resiliently loaded with a pressure p of 1 to $5.10^5$ Pa, such that it (they) can be moved to and fro over the mould in a horizontal direction.

15. An arrangement for carrying out the method as claimed in any one of the Claims 1 to 13, and using at least one roller which is constructed as a sound vibrator, characterized by a fixedly positioned supporting table (7) and at least one vibratory roller (5) which operates in the ultrasonic range (20 to 50 kHz) and which has a vibration amplitude up to 100 μm, which vibratory roller(s) is(are) resiliently loaded with a pressure p of 1 to $5.10^5$ Pa, such that it(they) can be moved to and fro over a closed elastic mould in a horizontal direction which mould holds starting material (1) which is to be homogenized and liquefied, and is to be arranged between the supporting table and the vibratory roller(s).

16. An arrangement as claimed in Claim 14 or 15, characterized by a sound generator or ultrasonic generator which is connected to the supporting table (7).

17. An arrangement as claimed in any of the Claims 14 to 16, characterized in that the elastic mould is a hose (3) which is made from; in particular, natural rubber.

18. The use of glass bodies as preforms for optical waveguides, the glass bodies being produced in accordance with the method as claimed in any one of the Claims 1 to 13.

## Revendications

1. Procédé pour la réalisation de corps en verre, selon lequel le matériau de départ pour les corps en verre sous forme d'une suspension thixotrope est homogénéisé à l'aide de forces mécaniques d'au moins un rouleau et se liquéfie après quoi il est soustrait aux forces mécaniques, solidifié par suite de l'effet thixotrope et soumis comme semi-produit poreux à une étape de nettoyage dans une phase gazeuse chauffée et fritté en un corps en verre, caractérisé en ce que le matériau de départ est homogénéisé dans une forme élastique fermée et liquéfiée, le rouleau étant sous forme de rouleau vibrant et mis en contact de compression avec le moule et guidé sur le moule fermé et le matériau de départ est démoulé après le durcissement.

2. Procédé selon la revendication 1, caractérisé en ce qu'on utilise un moule en matériau caoutchouteux élastique.

3. Procédé selon la revendication 1 ou 2, caractérisé en ce que le matériau de départ liquéfié, ensemble avec le moule élastique, est introduit dans un autre moule qui correspond à la forme du corps en verre à réaliser et qui est durci dans ce moule par effet thixotrope, puis démoulé et soumis aux autres étapes de traitement.

4. Procédé selon la revendication 1 ou 2, caractérisé en ce que le matériau de départ liquéfié est durci par effet thixotrope dans le moule élastique, puis démoulé et soumis aux autres étapes de traitement.

5. Procédé selon l'une des revendications 1 à 4, caractérisé en ce que comme matériau de départ pour le corps en verre, on utilise une suspension contenant des particlues de $SiO_2$ d'un diamètre de 10 à 500 nm, de préférence de 15 à 100 nm, le diamètre moyen des particules étant de 40 nm.

6. Procédé selon l'une des revendications 1 à 5, caractérisé en ce qu'on utilise une suspension aqueuse présentant un rapport en poids matière solide: eau de 1:1 à 2,4:1, de préférence de 1,4:1 à 2:1.

7. Procédé selon l'une des revendications 1 à 6, caractérisé en ce que la suspension est additionnée d'un additif ionogène à réaction basique qui assure le décalage de la valeur pH de la suspension de la gamme de pH d'environ 5,5 à 8.

8. Procédé selon la revendication 7, caractérisé en ce que comme additif ionogène, on utilise un composé d'ammonium.

9. Procédé selon la revendication 8, caractérisé en ce que comme additif ionogène, on utilise $NH_4F$ en solution aqueuse.

10. Procédé selon l'une des revendications 7 à 9, caractérisé en ce que l'additif ionigène est ajouté dans une quantité de 0,2 à 2,0% en poids rapporté à la part de matière solide dans la suspension.

11. Procédé selon les revendications 9 et 10, caractérisé en ce que comme matériau de départ, on utilise une suspensioin aqueuse contenant des particules de $SiO_2$ d'un diamètre moyen de 40 nm dans un rapport en poids matière solide: eau de 1,5:1, alors que comme additif ionogène, on ajoute une solution aqueuse à 5% de $NH_4F$ dans une quantité de 0,5% en poids, rapporté à la part de matière solide de la suspension.

12. Procédé selon l'une des revendications 1 à 11, caractérisé en ce que le matériau de départ est homogénéisé par laminage avec un rouleau vibrant fonctionnant dans la gamme des sons (50 Hz) ou la gamme des ultrasons (35 kHz) présentant une course à vide jusqu'à la grandeur du diamètre du moule et soumis à une pression d'application élastique p dans l'ordre de 1 à $5.10^5$ Pa.

13. Procédé selon l'une des revendications 1 à 12, caractérisé en ce que comme moule élastique, on utilise un tuyau en caoutchouc naturel.

14. Dispositif pour la mise en œuvre du procédé selon la revendication 1 à 13, à l'aide d'au moins un rouleau formé comme vibrateur sonore, caractérisé en ce qu'une table d'application (7) positionnée de façon fixe et au moins un rouleau vibrant (5) fonctionnant dans la gamme des sons (20 à 200 Hz) et présentant une course à vide jusqu'à la grandeur du diamètre d'un moule élastique fermé à disposer entre la table d'application et le(s) rouleaux vibrant(s) et contenant le matériau de départ à homogénéiser et à liquéfier, le(s) rouleau(x) vibrant(s) pouvant être animés de mouvements de va-et-vient dans la direction horizontale sur le moule sous pression d'application élastique p d'une grandeur de 1 à $5.10^5$ Pa.

15. Dispositif pour la mise en œuvre du procédé selon la revendication 1 à 13 à l'aide d'au moins un rouleau sous forme d'un vibrateur sonore, caractérisé en ce qu'une table d'application (7) positionnée de façon fixe et au moins un rouleau vibrant (5) fonctionnant dans la gamme des ultrasons (20 à 50 kHz) et présentant une amplitude de vibration jusqu'à 100 µm, qui peut être animé d'un mouvement de va-et-vient sous une pression d'application élastique p d'une grandeur de 1 à $5.10^5$ Pa dans la direction horizontale sur un moule élastique fermé disposé entre la table d'application et le(s) rouleau(x) vibrant(s) et contenant un matériau de départ à homogéniser et à liquéfier.

16. Dispositif selon la revendications 14 ou 15, caractérisé par un générateur de sons ou d'ultrasons qui est accouplé à la table d'application (7).

17. Procédé selon l'une des revendications 14 à 16, caractérisé en ce que la forme élastique est un tuyau (3), notamment en caoutchouc naturel.

18. Application de corps en verre réalisés conformément au procédé selon les revendications 1 à 13 comme préforme pour des guides d'ondes optiques.